# EUROPEAN PATENT SPECIFICATION

(11) **EP 3 730 203 B1**
(45) Date of publication and mention of the grant of the patent: **05.01.2022**
(21) Application number: 20165524.8
(22) Date of filing: 25.03.2020
(51) Int. Cl.: B01D 53/94, B01J 23/46, B01J 35/00, B01J 35/04, F01N 3/10, B01J 21/06, B01J 23/44, B01J 35/10, B01J 37/02, B01J 37/08, F01N 3/022, F01N 3/28

(54) **EXHAUST GAS PURIFICATION CATALYST**
ABGASREINIGUNGSKATALYSATOR
CATALYSEUR DE PURIFICATION DE GAZ D'ÉCHAPPEMENT

(30) Priority: 25.04.2019 JP 2019084093
(43) Date of publication of application: 28.10.2020
(73) Proprietor: TOYOTA JIDOSHA KABUSHIKI KAISHA, Toyota-shi, Aichi-ken 471-8571 (JP); CATALER CORPORATION, Kakegawa-shi, Shizuoka, 437-1492 (JP)
(72) Inventor: TOJO, Takumi, Aichi-ken, 471-8571 (JP); YOSHIDA, Takeru, Aichi-ken, 471-8571 (JP); SUZUKI, Hiromasa, Aichi-ken, 471-8571 (JP); ITO, Minoru, Shizuoka, 437-1492 (JP); IWATA, Kana, Shizuoka, 437-1492 (JP)
(74) Representative: J A Kemp LLP

(56) References cited:
- WO-A1-2019/065799
- WO-A1-2019/065804
- JP-A- 2017 006 827
- US-A1- 2018 229 183

## Description

### BACKGROUND

### Technical Field

The present disclosure relates to an exhaust gas purification catalyst.

### Description of Related Art

An exhaust gas discharged from an internal combustion engine for an automobile and the like, for example, an internal combustion engine, such as a gasoline engine or a diesel engine, contains harmful components, such as carbon monoxide (CO), hydrocarbon (HC), and nitrogen oxides (NOx).

Therefore, the internal combustion engine generally includes an exhaust gas purification device to decompose and remove these harmful components, and the harmful components are made almost detoxified by an exhaust gas purification catalyst disposed in the exhaust gas purification device. As such an exhaust gas purification catalyst, for example, a three-way catalyst and a NOx storage reduction catalyst have been known.

The three-way catalyst is a catalyst that simultaneously performs oxidation of CO and HC and reduction of NOx in a stoichiometric (theoretical air-fuel ratio) atmosphere.

The NOx storage reduction catalyst is a catalyst that oxidizes NO in the exhaust gas to NO₂ in a lean atmosphere to absorb the NO₂ and reduces it to nitrogen (N₂) in a stoichiometric atmosphere and a rich atmosphere. The NOx storage reduction catalyst cleverly uses change of the exhaust gas components in the lean atmosphere, the stoichiometric atmosphere, and the rich atmosphere.

However, even when these catalysts are employed, various kinds of examinations have been conducted for further improving the exhaust gas purification.

For example, JP 2015-85241 A discloses an exhaust gas purification catalyst in which noble metal particles are supported on a monolith substrate that contains ceria-zirconia composite oxide particles and θ-phase alumina particles and the content of the ceria-zirconia composite oxide particles is 25 % by weight or more relative to the total weight.

JP 2017-39069 A discloses an exhaust gas purification catalyst that includes a porous substrate having a honeycomb structure, a first catalyst which is Pd supported on the porous substrate, a coat layer formed on a surface of the porous substrate, and a second catalyst which is Rh supported on the coat layer. The porous substrate contains a cocatalyst which is a ceria-zirconia solid solution, an aggregate which is alumina, and an inorganic binder. The cocatalyst content in the porous substrate exceeds 50 pts.wt. relative to 100 pts.wt. as a sum of the cocatalyst and the aggregate. The coat layer contains a cocatalyst which is a ceria-zirconia solid solution.

JP 2006-231204 A discloses an exhaust gas purification catalyst that includes a carrier substrate, a catalyst support layer (catalyst-supporting layer) formed on the carrier substrate, and Pt, Pd, Rh, and a NOx storage material which are supported on the catalyst support layer. Rh is supported in a high concentration at a downstream portion of the carrier substrate disposed on a downstream side of an exhaust gas flow. Pt and Pd are supported in high concentrations at an upstream portion of the carrier substrate disposed on an upstream side of the exhaust gas flow.

### SUMMARY

In a Pd-Rh catalyst typically used for a maniverter, Rh has a relatively high contribution to NOx conversion. Meanwhile, since Rh has a low performance in combustion/conversion of HC compared with Pd, Rh is easily poisoned by HC. When Rh is poisoned, the NOx conversion performance is significantly degraded to easily cause emission deterioration.

For the HC poisoning, as a cause different from the above-described one, when the HC combustion is insufficient at a front portion of the catalyst close to an engine where a temperature becomes high, the HC poisoning at a rear portion of the catalyst occurs.

For the exhaust gas purification catalyst disclosed in JP 2015-85241 A, while supporting the noble metal on the substrate wall surface having a high frequency of contacting the exhaust gas is advantageous in the exhaust gas purification performance, at the same time, an influence of poisoning of the noble metal by the exhaust gas easily occurs.

Furthermore, for example, since the substrate catalyst typified by JP 2015-85241 A generally has a low specific surface area, an active point amount after endurance decreases, and performance degradation under the HC poisoning environment is increased compared with that of the conventional exhaust gas purification catalyst that includes a catalyst coat layer.

For the exhaust gas purification catalyst disclosed in JP 2017-39069 A, since Pd supported on the substrate catalyst is separated from Rh supported on the catalyst coat layer, alloying of Pd with Rh during endurance is reduced. However, since Pd excellent in HC combustion is positioned on a lower layer side of a gas flow path with respect to Rh, an Rh layer positioned on an upper layer side is largely influenced by the HC poisoning. Consequently, NOx emission to which conversion by Rh highly contributes possibly increases.

Furthermore, in JP 2017-39069 A, the substrate catalyst coating is performed to reduce the alloying of Pd and Rh during endurance. However, since the coating increases the weight, the advantage of warming-up performance provided by a low heat capacity of a substrate catalyst is possibly lost.

For the exhaust gas purification catalyst disclosed in JP 2006-231204 A, similarly, since every noble metal is supported in the catalyst support layer, the increase in weight by coating with the catalyst support layer increases heat capacity of the exhaust gas purification catalyst, thus causing difficulty in obtaining satisfactory warming-up performance. In JP 2006-231204 A, since the downstream portion does not contain Pd, the purification performance expected to Pd is insufficient in some cases when the exhaust gas flow rate increases. Furthermore, JP 2006-231204 A does not disclose a detailed distribution of the noble metals in the catalyst support layer.

Accordingly, the present disclosure provides an exhaust gas purification catalyst capable of efficiently converting HC in an upstream region relative to an exhaust gas flow direction of the exhaust gas purification catalyst and capable of efficiently converting NOx in a downstream region relative to the exhaust gas flow direction in the exhaust gas purification catalyst while maintaining a good warming-up performance.

As a result of intensive studies, the present inventors have found that in an exhaust gas purification catalyst that includes a monolith substrate formed by a catalyst carrier and a catalyst coat layer coated on the monolith substrate, Pd is supported on the monolith substrate, a constant amount (density) of a downstream coat layer containing Rh is formed as a catalyst coat layer from an end surface on a downstream side relative to an exhaust gas flow direction in the exhaust gas purification catalyst, and a Pd concentration in an upstream region relative to the exhaust gas flow direction in the exhaust gas purification catalyst is adjusted to higher than a Pd concentration in a downstream region, thereby ensuring conversion of HC in the exhaust gas upstream region of the exhaust gas purification catalyst and ensuring efficient conversion of NOx in the exhaust gas downstream region of the exhaust gas purification catalyst while maintaining a good warming-up performance. Thus, the inventors reached the present invention.

That is, the gist of the present invention is as follows.
(1) An exhaust gas purification catalyst comprising a monolith substrate formed by a catalyst carrier and a catalyst coat layer coated on the monolith substrate, wherein
   the monolith substrate contains Pd supported on the catalyst carrier,
   the catalyst coat layer includes a downstream coat layer formed from an end surface on a downstream side relative to an exhaust gas flow direction in the exhaust gas purification catalyst,
   the downstream coat layer contains Rh,
   the downstream coat layer has a coating amount of 10 g/L to 90 g/L based on one liter of a volume of a part of the monolith substrate on which the downstream coat layer is coated,
   the exhaust gas purification catalyst has an exhaust gas purification catalyst upstream portion that is formed in a range of 45% or less of a whole length of the exhaust gas purification catalyst from an end surface on an upstream side relative to the exhaust gas flow direction in the exhaust gas purification catalyst and an exhaust gas purification catalyst downstream portion that is defined by a range excluding the exhaust gas purification catalyst upstream portion, and
   the exhaust gas purification catalyst upstream portion has a Pd concentration higher than a Pd concentration in the exhaust gas purification catalyst downstream portion.
(2) The exhaust gas purification catalyst according to (1), wherein the exhaust gas purification catalyst upstream portion has a Pd loading amount of 0.5 g/L to 50 g/L in metal equivalent based on one liter of a volume of a monolith substrate upstream portion, and the exhaust gas purification catalyst downstream portion has a Pd loading amount of 0.05 g/L to 10 g/L in metal equivalent based on one liter of a volume of a monolith substrate downstream portion.
(3) The exhaust gas purification catalyst according to (1) or (2), wherein the downstream coat layer has a length of 30% or more of a whole length of the monolith substrate of the exhaust gas purification catalyst.
(4) The exhaust gas purification catalyst according to any one of (1) to (3), wherein the downstream coat layer has the coating amount of 15 g/L to 80 g/L based on one liter of the volume of the part of the monolith substrate on which the downstream coat layer is coated.
(5) The exhaust gas purification catalyst according to any one of (1) to (4), wherein the exhaust gas purification catalyst has the exhaust gas purification catalyst upstream portion that is formed in the range of 40% or less of the whole length of the exhaust gas purification catalyst from the end surface on the upstream side relative to the exhaust gas flow direction in the exhaust gas purification catalyst and the exhaust gas purification catalyst downstream portion that is defined by the range excluding the exhaust gas purification catalyst upstream portion.

### EFFECTS

The present invention provides the exhaust gas purification catalyst capable of efficiently converting HC in the upstream region (exhaust gas purification catalyst upstream portion) relative to the exhaust gas flow direction in the exhaust gas purification catalyst and capable of efficiently converting NOx in the downstream region (exhaust gas purification catalyst downstream portion, especially, the downstream coat layer) relative to the exhaust gas flow direction in the exhaust gas purification catalyst while maintaining the good warming-up performance.

### BRIEF DESCRIPTION OF THE DRAWINGS

FIG. 1 is a schematic drawing illustrating one embodiment of an exhaust gas purification catalyst of the present invention
FIG. 2 is a schematic drawing illustrating an embodiment of the exhaust gas purification catalyst of the present invention when a coating length of a downstream coat layer is 40%;
FIG. 3 is a schematic drawing illustrating an embodiment of the exhaust gas purification catalyst of the present invention when the coating length of the downstream coat layer is 80%;
FIG. 4 is a schematic drawing illustrating an embodiment of the exhaust gas purification catalyst of the present invention when the coating length of the downstream coat layer is 100%;
FIG. 5 is a schematic drawing illustrating an exhaust gas purification catalyst of Example 1;
FIG. 6 is a schematic drawing illustrating a device used in a performance evaluation;
FIG. 7 is a graph illustrating HC conversion ratios 20 seconds after warming-up start of Examples 1 to 4 and Comparative Examples 1 to 3;
FIG. 8 is a graph illustrating coating amounts of Examples 1 to 4 and Comparative Examples 1 to 3; and
FIG. 9 is a graph illustrating NOx-T50s of Examples 1 to 4 and Comparative Example 1.

### DETAILED DESCRIPTION OF THE EMBODIMENTS

The following describes embodiments of the present invention in detail. In this specification, features of the present invention will be described with reference to the drawings as necessary. In the drawings, dimensions and shapes of respective components are exaggerated for clarification, and actual dimensions and shapes are not accurately illustrated. Accordingly, the technical scope of the present invention is not limited to the dimensions and the shapes of respective components illustrated in the drawings.

The present invention relates to an exhaust gas purification catalyst including a monolith substrate formed by a catalyst carrier and a catalyst coat layer coated on the monolith substrate, in which the monolith substrate contains Pd, the catalyst coat layer includes a downstream coat layer, the downstream coat layer contains Rh, a density of the downstream coat layer is in a specific range, the exhaust gas purification catalyst has an upstream region (upstream portion) relative to an exhaust gas flow direction and a downstream region (downstream portion) excluding the upstream region and the upstream portion has a Pd concentration higher than a Pd concentration in the downstream portion.

### (Monolith Substrate)

For the monolith substrate, a known monolith substrate having a honeycomb shape (for example, a honeycomb filter and a high-density honeycomb) is usable. A material of the monolith substrate includes a catalyst carrier. While the catalyst carrier is not limited, the catalyst carrier includes a ceramic, such as cordierite (for example, a compound having a composition of 2MgO·2Al₂O₃·5SiO₂), silicon carbide (SiC), silica (SiO₂), alumina (Al₂O₃, for example, θ-phase alumina), mullite (for example, a compound having a composition of Al₆O₁₃Si₂), ceria (CeO₂), zirconia (ZrO₂), and a composite oxide or a solid solution of them (for example, ceria-zirconia composite oxide or solid solution), and a mixture of two or more kinds of them. In some embodiments, the catalyst carrier may contain a mixture of a ceria-zirconia composite oxide or a ceria-zirconia-alumina composite oxide and alumina. In some embodiments, these materials may contain generally used additive elements for improving heat resistance and/or purification performance.

The catalyst carrier constituting the monolith substrate supports Pd.

The monolith substrate has the upstream portion of the monolith substrate (also referred to as "monolith substrate upstream portion") and the downstream portion of the monolith substrate (also referred to as "monolith substrate downstream portion"). The monolith substrate upstream portion is formed in a range of 45% or less of the whole length of the monolith substrate (monolith substrate whole length) from an end surface on the upstream side relative to the exhaust gas flow direction in the exhaust gas purification catalyst (in which the end surface is also referred to as "Front end surface"). The monolith substrate downstream portion is defined by a range excluding the monolith substrate upstream portion. The monolith substrate upstream portion and the monolith substrate downstream portion have mutually different Pd concentrations, and the monolith substrate upstream portion supports Pd with a concentration higher than that in the monolith substrate downstream portion (Pd concentration treatment), that is, the monolith substrate upstream portion has the Pd concentration higher than that in the monolith substrate downstream portion.

For example, the monolith substrate upstream portion has a length of 40% or less of the monolith substrate whole length, 30% or less of the monolith substrate whole length, or 20% or less of the monolith substrate whole length. A lower limit value of the length of the monolith substrate upstream portion is not limited insofar as the monolith substrate upstream portion exists. For example, the length of the monolith substrate upstream portion is 5% or more of the monolith substrate whole length. For example, the length of the monolith substrate upstream portion is 10% or more of the monolith substrate whole length.

The monolith substrate upstream portion ordinarily has Pd in a loading amount (Pd loading amount) of 0.5 g/L to 50 g/L in metal equivalent based on one liter of a volume of the monolith substrate upstream portion. In some embodiments, the monolith substrate upstream portion may have Pd in a loading amount of 1 g/L to 30 g/L in metal equivalent based on one liter of the volume of the monolith substrate upstream portion.

The monolith substrate downstream portion ordinarily has Pd in a loading amount of 0.05 g/L to 10 g/L in metal equivalent based on one liter of a volume of the monolith substrate downstream portion. In some embodiments, the monolith substrate downstream portion may have Pd in a loading amount of 0.1 g/L to 5 g/L in metal equivalent based on one liter of the volume of the monolith substrate downstream portion.

The Pd amount of the monolith substrate upstream portion is ordinarily 1.5 times to 100 times of the Pd amount of the monolith substrate downstream portion. In some embodiments, the Pd amount of the monolith substrate upstream portion may be double to 80 times of the Pd amount of the monolith substrate downstream portion.

For the monolith substrate, the monolith substrate upstream portion, which is further close to an internal combustion engine and possibly becomes high temperature, has the Pd concentration higher than that in the monolith substrate downstream portion, thereby ensuring sufficiently combusting HC in the exhaust gas in the monolith substrate upstream portion, avoiding poisoning Rh present in the downstream coat layer of the exhaust gas purification catalyst, and efficiently removing NOx in the exhaust gas in the downstream coat layer.

For a method for supporting Pd on the catalyst carrier, a method generally used in the technical field of the exhaust gas purification catalyst can be used.

The catalyst carrier constituting the monolith substrate may further support Pt.

The catalyst carrier further supporting Pt ensures efficient purification of the exhaust gas.

### (Catalyst Coat Layer)

The catalyst coat layer includes the downstream coat layer.

The downstream coat layer is formed from an end surface on a downstream side relative to the exhaust gas flow direction in the exhaust gas purification catalyst (in which the end surface is also referred to as "Rear end surface," and the downstream side is a side on which the exhaust gas flows out). The downstream coat layer ordinarily has a length of 30% or more of the monolith substrate whole length of the exhaust gas purification catalyst. In some embodiments, the downstream coat layer may have a length of 40% to 100% of the monolith substrate whole length of the exhaust gas purification catalyst. In some embodiments, the downstream coat layer may have a length of 60% to 100% of the monolith substrate whole length of the exhaust gas purification catalyst.

### The downstream coat layer contains Rh.

An Rh loading amount of the downstream coat layer is not limited. The downstream coat layer ordinarily has Rh in a loading amount (Rh loading amount) of 0.01 g/L to 5g /L in metal equivalent based on one liter of a volume of a part of the monolith substrate on which the downstream coat layer is coated. In some embodiments, the downstream coat layer may have Rh in a loading amount of 0.05 g/L to 2 g/L in metal equivalent based on one liter of the volume of the part of the monolith substrate on which the downstream coat layer is coated.

The downstream coat layer containing Rh by the above-described amount ensures sufficient catalytic activity, and also ensures suppressing increase in cost due to excessively adding Rh.

While Rh provides the function as the catalyst even as it is, Rh may be supported on a powder carrier in some embodiments.

The powder carrier supporting Rh is not limited. The powder carrier may be any metal oxide generally used as a powder carrier in the technical field of the exhaust gas purification catalyst.

Accordingly, the downstream coat layer may further contain the powder carrier. The powder carrier includes a metal oxide, such as silica, magnesium oxide (MgO), zirconia, ceria, alumina, titania (TiO₂), yttria (Y₂O₃), neodymium oxide (Nd₂O₃), and a solid solution or a composite oxide of them, and a mixture of two or more kinds of them.

ZrO₂ suppresses sintering of the other powder carrier at a high temperature at which the sintering occurs on the other powder carrier, and by combining ZrO₂ with Rh as a catalytic metal, a steam reforming reaction occurs to generate H₂, thereby ensuring efficient reduction of NOx. Since CeO₂ has an Oxygen Storage Capacity (OSC) property where oxygen is absorbed under a lean atmosphere and oxygen is emitted under a rich atmosphere, an inside of the exhaust gas purification catalyst can be kept in a stoichiometric atmosphere. Therefore, CeO₂ can be appropriately used for a three-way catalyst and the like. Since an acid-base amphoteric carrier, for example, Al₂O₃, has a high specific surface area, sintering of a noble metal can be suppressed. TiO₂ can provide an effect to suppress sulfur poisoning of a catalytic metal.

It should be understood that according to the above-described properties of the powder carrier, the exhaust gas purification catalyst of the present disclosure has an exhaust gas purification ability, especially, a NOx conversion ability, that can be improved depending on the type, the composition, the combination and its proportion, and/or the amount of the selected powder carrier.

The specific surface area by BET of the powder carrier is ordinarily 20 m²/g or more. In some embodeiments, the specific surface area by BET of the powder carrier may be 30 m²/g or more.

When Rh is supported on the powder carrier, the large specific surface area of the powder carrier ensures increase of a contact surface between the exhaust gas, especially NOx, and Rh, and further, ensures decrease in performance degradation due to the sintering of Rh. Accordingly, the performance of the exhaust gas purification catalyst, especially, NOx conversion performance can be improved.

In the present disclosure, the powder carrier may be alumina, zirconia, a mixture of them, or an alumina-zirconia composite oxide, which is easily kept high in specific surface area also after high temperature durability. The powder carrier may contain ceria or a composite oxide, such as ceria-zirconia, that has an oxygen storage capacity to provide the oxygen storage capacity.

For a supporting method of Rh on the powder carrier, a method generally used in the technical field of the exhaust gas purification catalyst can be used.

The metal oxide may be contained in the downstream coat layer without supporting Rh.

The downstream coat layer has a coating amount of 10 g/L to 90 g/L based on one liter of the volume of the part of the monolith substrate on which the downstream coat layer is coated. In some embodiments, the downstream coat layer may have a coating amount of 15 g/L to 80 g/L based on one liter of the volume of the part of the monolith substrate on which the downstream coat layer is coated. In some embodiments, the downstream coat layer may have a coating amount of 15 g/L to 60 g/L based on one liter of the volume of the part of the monolith substrate on which the downstream coat layer is coated.

The thickness of the downstream coat layer is not limited. The thickness is ordinarily 5 µm to 200 µm in average thickness. In some embodiments, the thickness of the downstream coat layer may be 10 µm to 100 µm in average thickness. The thickness of the downstream coat layer can be measured by SEM and the like.

With the coating amount in the downstream coat layer and the thickness of the downstream coat layer in the above-described ranges, a balance among the pressure loss, the catalyst performance, the durability, and the warming-up performance of the exhaust gas purification catalyst can be properly kept.

In the present disclosure, when the downstream coat layer is coated on the monolith substrate upstream portion (that is, when the downstream coat layer is present at an upstream portion of the exhaust gas purification catalyst described below), the portion of the downstream coat layer coated on the monolith substrate upstream portion contains Pd.

Since the portion of the downstream coat layer coated on the monolith substrate upstream portion contains Pd, HC in the exhaust gas can be sufficiently combusted in the upstream portion of the exhaust gas purification catalyst, poisoning Rh in the monolith substrate downstream portion can be avoided, and NOx in the exhaust gas can be efficiently converted in the downstream coat layer.

### (Exhaust Gas Purification Catalyst)

The exhaust gas purification catalyst of the present disclosure has the upstream portion of the exhaust gas purification catalyst (also referred to as "exhaust gas purification catalyst upstream portion") and the downstream portion of the exhaust gas purification catalyst (also referred to as "exhaust gas purification catalyst downstream portion"). The exhaust gas purification catalyst upstream portion is formed in a range of 45% or less of the whole length of the exhaust gas purification catalyst (exhaust gas purification catalyst whole length) from an end surface on the upstream side relative to the exhaust gas flow direction in the exhaust gas purification catalyst. The exhaust gas purification catalyst downstream portion is defined by a range excluding the exhaust gas purification catalyst upstream portion. The exhaust gas purification catalyst upstream portion and the exhaust gas purification catalyst downstream portion have mutually different Pd concentrations, and the exhaust gas purification catalyst upstream portion supports Pd with a concentration higher than that in the exhaust gas purification catalyst downstream portion (Pd concentration treatment), that is, the exhaust gas purification catalyst upstream portion has the Pd concentration higher than that in the exhaust gas purification catalyst downstream portion. Note that, the exhaust gas purification catalyst has the whole length same as the monolith substrate whole length of the exhaust gas purification catalyst. The exhaust gas purification catalyst upstream portion has a length same as the length of the monolith substrate upstream portion, and the exhaust gas purification catalyst downstream portion also has a length same as the length of the monolith substrate downstream portion.

For example, the exhaust gas purification catalyst upstream portion has the length of 40% or less of the exhaust gas purification catalyst whole length, 30% or less of the exhaust gas purification catalyst whole length, or 20% or less of the exhaust gas purification catalyst whole length. A lower limit value of the length of the exhaust gas purification catalyst upstream portion is not limited insofar as the exhaust gas purification catalyst upstream portion exists. For example, the length of the exhaust gas purification catalyst upstream portion is 5% or more of the exhaust gas purification catalyst whole length. For example, the length of the exhaust gas purification catalyst upstream portion is 10% or more of the exhaust gas purification catalyst whole length.

The exhaust gas purification catalyst upstream portion ordinarily has Pd in a loading amount of 0.5 g/L to 50 g/L in metal equivalent based on one liter of a volume of the monolith substrate upstream portion. In some embodiments, the exhaust gas purification catalyst upstream portion ordinarily may have Pd in a loading amount of 1 g/L to 30 g/L in metal equivalent based on one liter of the volume of the monolith substrate upstream portion.

The exhaust gas purification catalyst downstream portion ordinarily has Pd in a loading amount of 0.05 g/L to 10 g/L in metal equivalent based on one liter of a volume of the monolith substrate downstream portion. In some embodeiments, the exhaust gas purification catalyst downstream portion may have Pd in a loading amount of 0.1 g/L to 5 g/L in metal equivalent based on one liter of the volume of the monolith substrate downstream portion.

The Pd amount of the exhaust gas purification catalyst upstream portion is ordinarily 1.5 times to 100 times of the Pd amount of the exhaust gas purification catalyst downstream portion. In some embodiments, the Pd amount of the exhaust gas purification catalyst upstream portion may be double to 80 times of the Pd amount of the exhaust gas purification catalyst downstream portion.

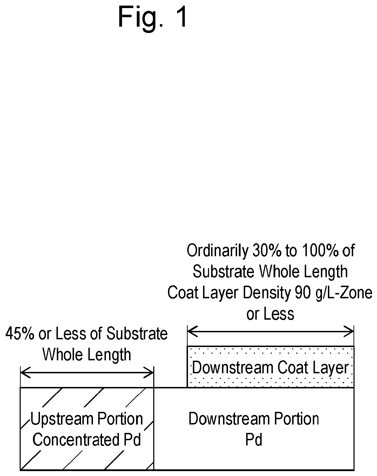

FIG. 1 is a schematic drawing illustrating one embodiment of the exhaust gas purification catalyst of the present invention For the exhaust gas purification catalyst illustrated in FIG. 1, the monolith substrate that contains Pd supported on the catalyst carrier has the upstream portion and the downstream portion. The upstream portion is 45% or less of the monolith substrate whole length, and the upstream portion has higher Pd concentration. The downstream portion has lower Pd concentration than the upstream portion. The monolith substrate includes the downstream coat layer that is ordinarily 30% to 100% of the monolith substrate whole length and contains Rh. The downstream coat layer has the coating amount adjusted to 90 g/L-zone or less based on one liter of the part of the monolith substrate on which the downstream coat layer is coated. For the exhaust gas purification catalyst illustrated in FIG. 1, HC is selectively converted in the upstream portion of the exhaust gas purification catalyst (monolith substrate), thereby suppressing poisoning Rh in the downstream coat layer to improve the Rh activity. By limiting the coating amount of the downstream coat layer, increase of the coating amount is suppressed to maintain the warming-up performance.

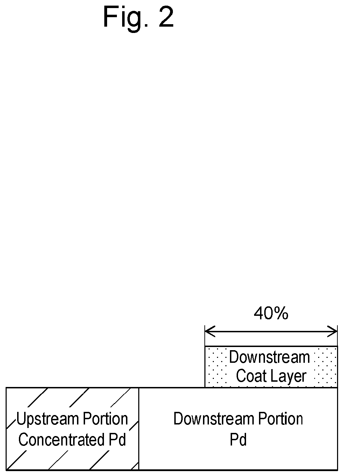

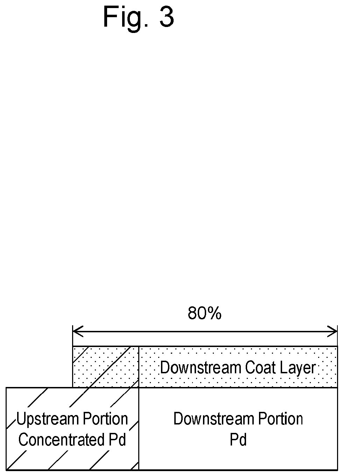

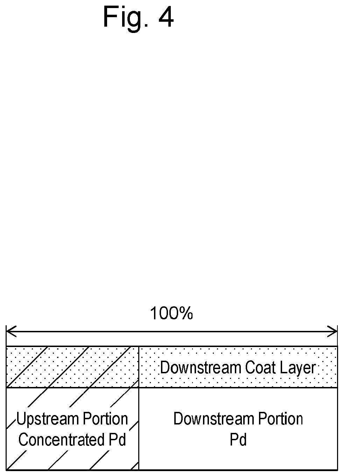

Next, FIGS. 2 to 4 further illustrate other embodiments of the exhaust gas purification catalyst illustrated in FIG. 1. FIG. 2 is a schematic drawing illustrating an embodiment of the exhaust gas purification catalyst of the present invention when the coating length of the downstream coat layer is 40%. FIG. 3 is a schematic drawing illustrating an embodiment of the exhaust gas purification catalyst of the present invention when the coating length of the downstream coat layer is 80%. FIG. 4 is a schematic drawing illustrating an embodiment of the exhaust gas purification catalyst of the present invention when the coating length of the downstream coat layer is 100%.

For the exhaust gas purification catalyst illustrated in FIG. 2, the coating length of the downstream coat layer is 40%, and the downstream coat layer is not coated on the monolith substrate upstream portion. Meanwhile, in the exhaust gas purification catalysts illustrated in FIGS. 3 and 4, the coating length of the downstream coat layer is 80% or 100%, and the downstream coat layer is coated on the monolith substrate upstream portion. For the exhaust gas purification catalysts as illustrated in FIGS. 3 and 4, similarly to the monolith substrate upstream portion, the Pd concentration treatment is performed on the part of the downstream coat layer coated on the monolith substrate upstream portion.

For the exhaust gas purification catalyst of the present invention, the exhaust gas purification catalyst upstream portion, which is further close to an internal combustion engine and possibly becomes high temperature, has the Pd concentration higher than that in the exhaust gas purification catalyst downstream portion, thereby ensuring sufficiently combusting HC in the exhaust gas in the exhaust gas purification catalyst upstream portion, avoiding poisoning Rh present in the downstream coat layer of the exhaust gas purification catalyst, and efficiently converting NOx in the exhaust gas in the downstream coat layer.

### (Method for Manufacturing Exhaust Gas Purification Catalyst)

The exhaust gas purification catalyst of the present invention can be manufactured using a known coating technique excluding the use of the above-described components of the exhaust gas purification catalyst.

The exhaust gas purification catalyst of the present invention can be manufactured, for example, as follows. First, a solution that contains Pd, a solvent (for example, water, an alcohol, or a mixture of water and an alcohol), and optionally an additive, and the like is supported on the monolith substrate downstream portion by, for example, a soaking method. For the coating, a wash coat method and the like may be used. Here, the monolith substrate may be masked excluding the monolith substrate downstream portion that supports Pd. After blowing extra solution away with a blower and the like, for example, in an atmosphere, drying is performed at 100°C to 150°C for one hour to three hours to remove a solvent content, and in the atmosphere, firing is performed at 450°C to 550°C for one hour to three hours, thus supporting Pd. Subsequently, on the monolith substrate where Pd is supported on the monolith substrate downstream portion, a catalyst coat layer slurry for the downstream coat layer that contains Rh, a solvent (for example, water, an alcohol, or a mixture of water and an alcohol), a carrier powder, and optionally an additive (binder), and the like is flown into a region where the downstream coat layer is formed, thus performing coating. For the coating, the wash coat method and the like may be used. Here, the monolith substrate may be masked excluding the region where the downstream coat layer is formed. After blowing extra slurry away with a blower and the like, for example, in an atmosphere, drying is performed at 100°C to 150°C for one hour to three hours to remove a solvent content, and in the atmosphere, firing is performed at 450°C to 550°C for one hour to three hours to form the downstream coat layer. Subsequently, on the monolith substrate on which the downstream coat layer is formed, a solution that contains Pd, a solvent (for example, water, an alcohol, or a mixture of water and an alcohol), and optionally an additive, and the like is coated on a portion where Pd is supported with a concentration higher than a concentration of Pd supported on the monolith substrate downstream portion, that is, the monolith substrate upstream portion and optionally a portion of the downstream coat layer existing on the monolith substrate upstream portion by, for example, the soaking method. For the coating, the wash coat method and the like may be used. Here, the monolith substrate on which the downstream coat layer is formed may be masked excluding the region where Pd is supported with a concentration higher than a concentration of Pd supported on the monolith substrate downstream portion. After blowing extra solution away with a blower and the like, for example, in an atmosphere, drying is performed at 100°C to 150°C for one hour to three hours to remove a solvent content, and in the atmosphere, firing is performed at 450°C to 550°C for one hour to three hours, thus supporting Pd.

### (Use of Exhaust Gas Purification Catalyst)

The exhaust gas purification catalyst of the present invention can be used mainly as a purification catalyst for an exhaust gas from an internal combustion engine for an automobile, especially, an exhaust gas purification catalyst immediately downstream of an internal combustion engine for an automobile (that is, an exhaust gas purification catalyst included in a front stage).

### [Examples]

The following describes some Examples regarding the present disclosure, but the description is not intended to limit the present disclosure in these Examples.

### I. Manufacture of Exhaust Gas Purification Catalyst

Monolith substrate to be used: monolith substrate containing a ceria-zirconia composite oxide (volume: 860 cc, substrate length: 80 mm, substrate diameter: 117 mm, number of cells: 500 cell/(inch)², wall thickness: 120 µm)

### Comparative Example 1

The entire monolith substrate was immersed in a water solution containing palladium nitrate and rhodium nitrate, and drying and firing were performed (drying at 120°C for two hours to remove a water content and subsequently firing in an electric furnace at 500°C for two hours) to cause Pd (0.47 g) and Rh (0.27 g) to be absorbed and supported on the entire monolith substrate. Subsequently, the monolith substrate upstream portion (position at 32 mm from the Front end surface of the monolith substrate, that is, the length of the monolith substrate upstream portion was 40% of the monolith substrate whole length) was immersed in a water solution containing palladium nitrate, and drying and firing were performed (drying at 120°C for two hours to remove a water content and subsequently firing in an electric furnace at 500°C for two hours) to cause Pd (0.97 g) to be absorbed and supported on the monolith substrate upstream portion, thus manufacturing the exhaust gas purification catalyst.

### Example 1

The entire monolith substrate was immersed in a water solution containing palladium nitrate, and drying and firing were performed (drying at 120°C for two hours to remove a water content and subsequently firing in an electric furnace at 500°C for two hours) to cause Pd (0.47 g) to be absorbed and supported on the entire monolith substrate.

A ZrO₂-Al₂O₃ powder containing ZrO₂ and Al₂O₃ (BET specific surface area: 53 m²/g, ZrO₂: 60 % by weight, Al₂O₃: 30 % by weight (sum of La₂O₃, Y₂O₃, and Nd₂O₃ was 10 % by weight)) was dispersed in a beaker with water, a rhodium nitrate aqueous solution adjusted so as to have the Rh loading amount of 0.27 g in the downstream coat layer was added thereto, and the obtained slurry was dried and fired (drying at 120°C for two hours to remove a water content and subsequently firing in an electric furnace at 500°C for two hours), thus preparing a coat material [Rh/ (ZrO₂-Al₂O₃)].

Subsequently, the downstream coat layer slurry obtained by dispersing the coat material in water was flown up to a position at 32 mm from the Rear end surface of the monolith substrate where Pd was supported on the monolith substrate downstream portion (that is, the length of the downstream coat layer was 40% of the monolith substrate whole length) so as to have the coating amount of the coat material by 12.5 g, drying was performed at 120°C for two hours, and subsequently firing was performed at 500°C for two hours, thus forming the downstream coat layer.

Finally, up to the position at 32 mm from the Front end surface of the monolith substrate on the monolith substrate where the downstream coat layer was formed (that is, the length of the upstream portion was 40% of the monolith substrate whole length) was immersed in a water solution containing palladium nitrate, drying and firing were performed (drying at 120°C for two hours to remove a water content and subsequently firing in an electric furnace at 500°C for two hours) to cause Pd (0.97 g) to be absorbed and supported on the upstream portion, thus manufacturing the exhaust gas purification catalyst.

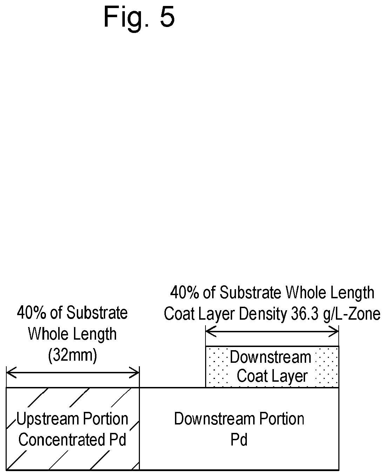

FIG. 5 is a schematic drawing illustrating the exhaust gas purification catalyst of Example 1.

### Example 2

The exhaust gas purification catalyst was manufactured similarly to Example 1 excluding that the downstream coat layer slurry obtained by dispersing the coat material in water was flown up to a position at 48 mm from the Rear end surface of the monolith substrate where Pd was supported on the monolith substrate downstream portion (that is, the length of the downstream coat layer was 60% of the monolith substrate whole length) so as to have the coating amount of the coat material by 18.7 g.

### Example 3

The exhaust gas purification catalyst was manufactured similarly to Example 1 excluding that the downstream coat layer slurry obtained by dispersing the coat material in water was flown up to a position at 64 mm from the Rear end surface of the monolith substrate where Pd was supported on the monolith substrate downstream portion (that is, the length of the downstream coat layer was 80% of the monolith substrate whole length) so as to have the coating amount of the coat material by 25.0 g.

### Example 4

The exhaust gas purification catalyst was manufactured similarly to Example 1 excluding that the downstream coat layer slurry obtained by dispersing the coat material in water was flown up to a position at 80 mm from the Rear end surface of the monolith substrate where Pd was supported on the monolith substrate downstream portion (that is, the length of the downstream coat layer was 100% of the monolith substrate whole length, and that is, the downstream coat layer is entirely coated on the monolith substrate) so as to have the coating amount of the coat material by 31.3 g.

### Comparative Example 2

The exhaust gas purification catalyst was manufactured similarly to Example 1 excluding that the downstream coat layer slurry obtained by dispersing the coat material in water was flown up to a position at 80 mm from the Rear end surface of the monolith substrate where Pd was supported on the monolith substrate downstream portion (that is, the length of the downstream coat layer was 100% of the monolith substrate whole length, and that is, the downstream coat layer is entirely coated on the monolith substrate) so as to have the coating amount of the coat material by 78.2 g.

### Comparative Example 3

The exhaust gas purification catalyst was manufactured similarly to Comparative Example 1 excluding that Pd was not supported on the monolith substrate upstream portion.

Table 1 indicates catalyst configurations of the exhaust gas purification catalysts of Examples 1 to 4 and Comparative Examples 1 to 3. Note that, in the table, [g/L] is a unit that indicates a weight per liter of the volume of the upstream portion, the downstream portion, or the corresponding portion of the downstream coat layer of the monolith substrate.

**[Table 1]**

| | Upstream Portion Pd Loading Amount [g/L] | Downstream Portion Pd Loading Amount [g/L] | Downstream Coat Layer Rh Loading Amount [g/L] | Downstream Coat Layer Length [%] | Downstream Coat Layer Coat Amount [g/L] |
|---|---|---|---|---|---|
| Comparative Example 1 | 3.37 | 0.55 | (0.31) | 0 | 0 |
| Example 1 | 3.37 | 0.55 | 0.78 | 40 | 36.3 |
| Example 2 | 3.37 | 0.55 | 0.52 | 60 | 36.3 |
| Example 3 | 3.37 | 0.55 | 0.39 | 80 | 36.3 |
| Example 4 | 3.37 | 0.55 | 0.31 | 100 | 36.3 |
| Comparative Example 2 | 3.37 | 0.55 | 0.31 | 100 | 90.7 |
| Comparative Example 3 | 0.55 | 0.55 | (0.31) | 0 | 0 |

| | | | | | |
|---|---|---|---|---|---|
| *Numerals in parentheses in Comparative Examples 1 and 3 are values related to the Rh amount of the entire substrate. | | | | | |

### II. Durability Test

For Examples 1 to 4 and Comparative Examples 1 to 3, the following durability test was performed using an actual engine.

The durability test was performed under an atmosphere of a compound pattern including a stoichiometric feedback and an A/F variation of fuel cut for 50 hours while the exhaust gas purification catalysts were each installed immediately below an exhaust manifold of a V-type 8-cylinder 4.6 L engine, and a catalyst bed temperature was set to 950°C.

### III. Performance Evaluation

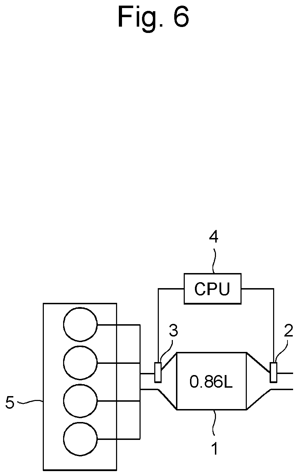

The following performance evaluations were performed for the exhaust gas purification catalysts of Examples 1 to 4 and Comparative Examples 1 to 3 where "II. Durability Test" was performed. FIG. 6 is a schematic drawing illustrating a device used in the performance evaluation.

### <HC Conversion Ratio Evaluation Test 20 Seconds after Warming-Up Start>

A maniverter (ϕ 117 mm × L 80 mm, 500 cpsi) 1 to which the exhaust gas purification catalyst was installed was mounted to an inline 4-cylinder 2.5 L gasoline engine 5, an analyzer was connected to an inlet-side and an outlet-side of the exhaust gas purification catalyst for an inlet gas, the inlet gas at 600°C was blown from a cool state where the bed temperature of the exhaust gas purification catalyst was 50°C while controlling to a mild rich condition of A/F = 14.4 with air-fuel ratio sensors 2 and 3 and an ECU (air-fuel ratio control) 4, and components of the inlet gas on the inlet-side and the outlet-side of the exhaust gas purification catalyst were measured with the analyzer 20 seconds later, thus calculating a conversion ratio of the inlet gas.

### <NOx-T50 Evaluation Test>

The maniverter (ϕ 117 mm × L 80 mm, 500 cpsi) 1 to which the exhaust gas purification catalyst was installed was mounted to the inline 4-cylinder 2.5 L gasoline engine 5, the analyzer was connected to the inlet-side and the outlet-side of the exhaust gas purification catalyst for the inlet gas, an inlet temperature of the exhaust gas purification catalyst was raised to 200°C to 550°C while controlling to the mild rich condition of A/F = 14.4 with the air-fuel ratio sensors 2 and 3 and the ECU (air-fuel ratio control) 4, and the components of the inlet gas on the inlet-side and the outlet-side of the exhaust gas purification catalyst were measured with the analyzer, thus calculating the purification ratio of the inlet gas. At this time, the inlet gas temperature of the exhaust gas purification catalyst when NOx was converted by 50% was indicated as "NOx-T50."

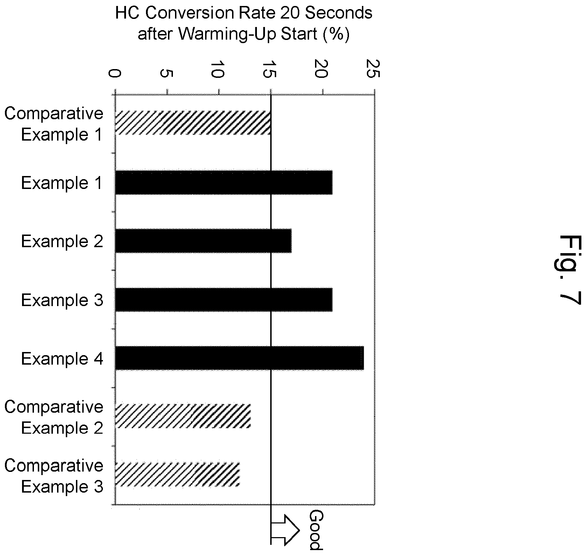

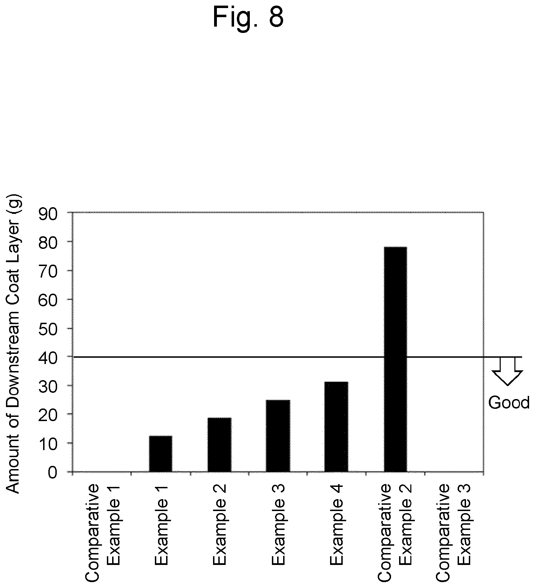

FIG. 7 illustrates the HC conversion ratios 20 seconds after warming-up start of Examples 1 to 4 and Comparative Examples 1 to 3. FIG. 8 illustrates the coating amounts of Examples 1 to 4 and Comparative Examples 1 to 3. It was seen from FIG. 7 that the HC conversion ratios 20 seconds after the warming-up start of Examples 1 to 4 were excellent compared with those of Comparative Examples 1 to 3. Note that, the HC conversion ratio of Comparative Example 1 was higher than that of Comparative Example 3 because Pd was supported on the monolith substrate upstream portion in Comparative Example 1 to improve HC flammability in the exhaust gas purification catalyst upstream portion.

In Comparative Example 2, the Pd concentration in the monolith substrate upstream portion was higher than that in the monolith substrate downstream portion, and Rh was supported on the coat material having a high specific surface area. Regardless of this, the HC conversion ratio during 20 seconds after the warming-up start was low. This is considered as follows. In Comparative Example 2, the high coating amount as illustrated in FIG. 8 increased a thermal capacity due to increase in weight of the coating amount, thus decreasing the HC conversion ratio during the cold warming-up.

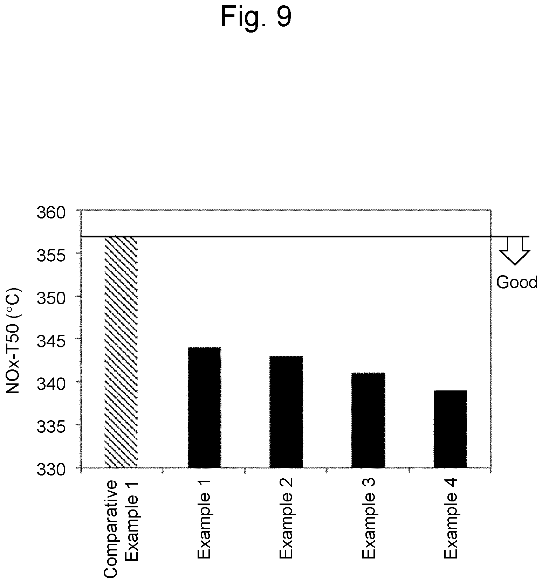

FIG. 9 illustrates the NOx-T50s of Examples 1 to 4 and Comparative Examples 1. It was seen from FIG. 9 that the NOx-T50s of Examples 1 to 4 were excellent compared with that of Comparative Examples 1. This is considered as follows. In Examples 1 to 4, the HC flammability was improved because the Pd concentration in the monolith substrate upstream portion was higher than that in the monolith substrate downstream portion, thereby suppressing the HC poisoning of Rh, and Rh active sites are highly dispersed by supporting Rh on the coat material having a high specific surface area (specific surface area 53 m²/g), thereby improving the NOx conversion ratio.

In Examples 1 to 4, the coat materials had the same coating density for coating, and Example 4, where the downstream coat layer was formed from the Rear end surface of the monolith substrate by 100% of the monolith substrate whole length, exhibited the highest activity. This is considered as follows. In Example 4, the noble metal density decreased to improve the dispersibility of the Rh active sites.

### DESCRIPTION OF SYMBOLS

| | |
|---|---|
| 1 | Maniverter |
| 2 | Air-fuel ratio sensor (rear of exhaust gas purification catalyst) |
| 3 | Air-fuel ratio sensor (front of exhaust gas purification catalyst) |
| 4 | ECU |
| 5 | Inline 4-cylinder 2.5 L gasoline engine |

## Claims

1. An exhaust gas purification catalyst comprising a monolith substrate formed by a catalyst carrier and a catalyst coat layer coated on the monolith substrate, wherein
the monolith substrate contains Pd supported on the catalyst carrier,
the catalyst coat layer includes a downstream coat layer formed from an end surface on a downstream side relative to an exhaust gas flow direction in the exhaust gas purification catalyst,
the downstream coat layer contains Rh,
the downstream coat layer has a coating amount of 10 g/L to 90 g/L based on one liter of a volume of a part of the monolith substrate on which the downstream coat layer is coated,
the exhaust gas purification catalyst has an exhaust gas purification catalyst upstream portion that is formed in a range of 45% or less of a whole length of the exhaust gas purification catalyst from an end surface on an upstream side relative to the exhaust gas flow direction in the exhaust gas purification catalyst and an exhaust gas purification catalyst downstream portion that is defined by a range excluding the exhaust gas purification catalyst upstream portion, and
the exhaust gas purification catalyst upstream portion has a Pd concentration higher than a Pd concentration in the exhaust gas purification catalyst downstream portion.

2. The exhaust gas purification catalyst according to claim 1, wherein
the exhaust gas purification catalyst upstream portion has a Pd loading amount of 0.5 g/L to 50 g/L in metal equivalent based on one liter of a volume of a monolith substrate upstream portion, and the exhaust gas purification catalyst downstream portion has a Pd loading amount of 0.05 g/L to 10 g/L in metal equivalent based on one liter of a volume of a monolith substrate downstream portion.

3. The exhaust gas purification catalyst according to claim 1 or 2, wherein
the downstream coat layer has a length of 30% or more of a whole length of the monolith substrate of the exhaust gas purification catalyst.

4. The exhaust gas purification catalyst according to any one of claims 1-3, wherein
the downstream coat layer has the coating amount of 15 g/L to 80 g/L based on one liter of the volume of the part of the monolith substrate on which the downstream coat layer is coated.

5. The exhaust gas purification catalyst according to any one of claims 1-4, wherein
the exhaust gas purification catalyst has the exhaust gas purification catalyst upstream portion that is formed in the range of 40% or less of the whole length of the exhaust gas purification catalyst from the end surface on the upstream side relative to the exhaust gas flow direction in the exhaust gas purification catalyst and the exhaust gas purification catalyst downstream portion that is defined by the range excluding the exhaust gas purification catalyst upstream portion.

## Patentansprüche

1. Abgasreinigungskatalysator, umfassend ein Monolithsubstrat, das durch einen Katalysatorträger gebildet wird, und eine auf das Monolithsubstrat aufgebrachte Katalysatorüberzugsschicht, wobei
das Monolithsubstrat auf dem Katalysatorträger gehaltenes Pd enthält,
die Katalysatorüberzugsschicht eine stromabwärts gelegene Überzugsschicht umfasst, die von einer Endfläche auf einer stromabwärts gelegenen Seite relativ zu einer Abgasströmungsrichtung in dem Abgasreinigungskatalysator gebildet wird,
die stromabwärts gelegene Überzugsschicht Rh enthält,
die stromabwärts gelegene Überzugsschicht eine Beschichtungsmenge von 10 g/l bis 90 g/l aufweist, bezogen auf einen Liter eines Volumens eines Teils des Monolithsubstrats, auf den die stromabwärts gelegene Überzugsschicht geschichtet ist,
der Abgasreinigungskatalysator einen stromaufwärts gelegenen Abschnitt des Abgasreinigungskatalysators, der in einem Bereich von 45 % oder weniger einer gesamten Länge des Abgasreinigungskatalysators von einer Endfläche auf einer stromaufwärts gelegenen Seite relativ zu der Abgasströmungsrichtung in dem Abgasreinigungskatalysator gebildet ist, und einen stromabwärts gelegenen Abschnitt des Abgasreinigungskatalysators aufweist, der durch einen Bereich ausschließlich des stromaufwärts gelegenen Abschnitts des Abgasreinigungskatalysators definiert ist, und
der stromaufwärts gelegene Abschnitt des Abgasreinigungskatalysators eine Pd-Konzentration aufweist, die höher als eine Pd-Konzentration in dem stromabwärts gelegenen Abschnitt des Abgasreinigungskatalysators ist.

2. Abgasreinigungskatalysator nach Anspruch 1, wobei
der stromaufwärts gelegene Abschnitt des Abgasreinigungskatalysators eine Pd-Beladungsmenge von 0,5 g/l bis 50 g/l in Metalläquivalent aufweist, bezogen auf einen Liter eines Volumens eines stromaufwärts gelegenen Abschnitts eines Monolithsubstrats, und der stromabwärts gelegene Abschnitt des Abgasreinigungskatalysators eine Pd-Beladungsmenge von 0,05 g/l bis 10 g/l in Metalläquivalent aufweist, bezogen auf einen Liter eines Volumens eines stromabwärts gelegenen Abschnitts eines Monolithsubstrats.

3. Abgasreinigungskatalysator nach Anspruch 1 oder 2, wobei
die stromabwärts gelegene Überzugsschicht eine Länge von 30 % oder mehr einer Gesamtlänge des Monolithsubstrats des Abgasreinigungskatalysators aufweist.

4. Abgasreinigungskatalysator nach einem der Ansprüche 1 bis 3, wobei
die stromabwärts gelegene Überzugsschicht eine Beschichtungsmenge von 15 g/l bis 80 g/l aufweist, bezogen auf einen Liter des Volumens des Teils des Monolithsubstrats, auf den die stromabwärts gelegene Überzugsschicht geschichtet ist.

5. Abgasreinigungskatalysator nach einem der Ansprüche 1 bis 4, wobei
der Abgasreinigungskatalysator den stromaufwärts gelegenen Abschnitt des Abgasreinigungskatalysators, der im Bereich von 40 % oder weniger der gesamten Länge des Abgasreinigungskatalysators von der Endfläche auf der stromaufwärts gelegenen Seite relativ zu der Abgasströmungsrichtung im Abgasreinigungskatalysator gebildet ist, und den stromabwärts gelegenen Abschnitt des Abgasreinigungskatalysators aufweist, der durch den Bereich ausschließlich des stromaufwärts gelegenen Abschnitts des Abgasreinigungskatalysators definiert ist.

## Revendications

1. Catalyseur de purification de gaz d'échappement comprenant un substrat monolithique formé par un support de catalyseur et une couche de revêtement de catalyseur revêtue sur le substrat monolithique, dans lequel
le substrat monolithique contient du Pd supporté sur le support de catalyseur,
la couche de revêtement de catalyseur comprend une couche de revêtement en aval formée à partir de une surface d'extrémité sur un côté en aval par rapport à une direction d'écoulement du gaz d'échappement dans le catalyseur de purification de gaz d'échappement,
la couche de revêtement en aval contient du Rh,
la couche de revêtement en aval a une quantité de revêtement de 10 g/L à 90 g/L sur la base d'un litre d'un volume d'une partie du substrat monolithique sur lequel la couche de revêtement en aval est appliquée,
le catalyseur de purification de gaz d'échappement a une partie amont de catalyseur de purification de gaz d'échappement qui est formée dans une plage de 45% ou moins d'une longueur totale du catalyseur de purification de gaz d'échappement à partir d'une surface d'extrémité sur un côté amont par rapport à la direction d'écoulement de gaz d'échappement dans le catalyseur de purification de gaz d'échappement et une partie aval de catalyseur de purification de gaz d'échappement qui est définie par une plage excluant la partie amont de catalyseur de purification de gaz d'échappement, et
la partie amont de catalyseur de purification de gaz d'échappement a une concentration en Pd supérieure à une concentration en Pd dans la partie aval de catalyseur de purification de gaz d'échappement.

2. Catalyseur de purification de gaz d'échappement selon la revendication 1, dans lequel
la partie amont de catalyseur de purification de gaz d'échappement a une quantité de charge de Pd de 0,5 g/L à 50 g/L en équivalent métal sur la base d'un litre d'un volume d'une partie amont de substrat monolithique, et la partie aval de catalyseur de purification de gaz d'échappement a une quantité de charge de Pd de 0,05 g/L à 10 g/L en équivalent métal sur la base d'un litre d'un volume d'une partie aval de substrat monolithique.

3. Catalyseur de purification de gaz d'échappement selon la revendication 1 ou 2, dans lequel
la couche de revêtement en aval a une longueur de 30% ou plus d'une longueur totale du substrat monolithique du catalyseur de purification de gaz d'échappement.

4. Catalyseur de purification de gaz d'échappement selon l'une quelconque des revendications 1 à 3, dans lequel
la couche de revêtement en aval a une quantité de revêtement de 15 g/L à 80 g/L sur la base d'un litre du volume de la partie du substrat monolithique sur laquelle la couche de revêtement en aval est appliquée.

5. Catalyseur de purification de gaz d'échappement selon l'une quelconque des revendications 1 à 4, dans lequel
le catalyseur de purification de gaz d'échappement a la partie amont de catalyseur de purification de gaz d'échappement qui est formée dans la plage de 40% ou moins de la longueur totale du catalyseur de purification de gaz d'échappement depuis la surface d'extrémité sur le côté amont par rapport à la direction d'écoulement de gaz d'échappement dans le catalyseur de purification de gaz d'échappement et la partie aval de catalyseur de purification de gaz d'échappement qui est définie par la plage excluant la partie amont de catalyseur de purification de gaz d'échappement.
